# FASCICULE DE BREVET EUROPEEN

(11) **EP 4 561 905 B1**
(45) Date de publication et mention de la délivrance du brevet: **16.09.2026**
(21) Numéro de dépôt: 23744207.4
(22) Date de dépôt: 20.06.2023
(51) Int. Cl.: B64G 1/00, B64G 1/64, B64G 1/62

(54) **ENCEINTE ANNULAIRE D'ETAGE INTERMEDIAIRE D'UN LANCEUR AEROSPATIAL AVEC RALENTISSEUR DE CHUTE**
RINGFÖRMIGES GEHÄUSE FÜR EINE ZWISCHENSTUFE EINER FLUGZEUGSTARTVORRICHTUNG MIT FALLVERZÖGERER
ANNULAR ENCLOSURE FOR AN INTERMEDIATE STAGE OF AN AEROSPACE LAUNCHER WITH FALL RETARDER

(30) Priorité: 25.07.2022 FR 2207607
(43) Date de publication de la demande: 04.06.2025
(73) Titulaire: ARIANEGROUP SAS, 78130 Les Mureaux (FR)
(72) Inventeur: KARAGOZ, Anthony, 33185 LE HAILLAN (FR); PALLEGOIX, Jean-Francois, 33185 LE HAILLAN (FR)
(74) Mandataire: Cabinet Beau de Loménie
(86) Numéro de dépôt international: PCT/FR2023/050919
(87) Numéro de publication internationale: WO 2024/023410

(56) Documents cités:
- EP-A2- 1 013 546
- EP-A2- 2 778 074
- US-A- 5 108 047
- US-A1- 2005 056 726
- US-A1- 2006 219 846
- US-A1- 2011 139 936
- US-A1- 2022 081 130
- US-B1- 10 669 048

## Description

### Domaine Technique

L'invention concerne un étage intermédiaire d'un engin spatial tel qu'un lanceur aérospatial, et plus particulièrement une enceinte d'un étage intermédiaire d'un lanceur aérospatial dotée d'un ralentisseur de chute pour limiter les trajectoires de chute de l'enceinte après sa séparation du lanceur.

### Technique antérieure

Les lanceurs aérospatiaux comprennent généralement plusieurs étages pour intervenant chacun à différentes étapes du lancement au-delà de l'atmosphère d'une charge embarquée, la charge embarqué pouvant être un satellite, une sonde spatiale ou même un vaisseau habité.

Un lanceur comprend ainsi une coiffe située à l'extrémité avant du lanceur et destinée à protéger la charge utile au début de la phase de lancement, une case à équipements où sont rassemblés la plupart des systèmes de guidage, de pilotage et de localisation, et plusieurs étages, souvent trois étages, chaque étage étant doté d'un système de propulsion.

Le dernier étage, par exemple le troisième, comprend généralement la charge embarquée destinée à être envoyée hors de l'atmosphère terrestre, ainsi qu'un petit système de propulsion avec un réservoir de carburant pour permettre de transporter la charge après être sortie de l'atmosphère terrestre, jusqu'à son lieu de livraison.

Les autres étages, le premier et le deuxième par exemple, sont deux étages dédiés purement à la propulsion du lanceur à deux phases distinctes. Les systèmes de propulsions associés à chacun des étages sont beaucoup plus importants en termes de volume et de puissance développée que le système de propulsion du dernier étage ; les dimensions du système de propulsion du premier étage étant plus grandes que celui du second étage.

Etant donné les dimensions importantes des tuyères de propulsion du deuxième étage du lanceur, les lanceurs comprennent généralement un étage intermédiaire, ou inter-étage, positionné entre le premier étage et le deuxième étage. L'étage intermédiaire comprend ainsi principalement une enceinte permettant d'enfermer au moins une portion du système de propulsion du second étage du lanceur, et ainsi de préserver l'aérodynamisme du lanceur lors de la première phase de lancement utilisant le premier étage pour la propulsion du lanceur.

A l'issue de la première phase de lancement, le lanceur se détache de son premier étage pour s'alléger du poids superflu, et actionne alors le deuxième système de propulsion pour continuer son lancement dans une deuxième phase de lancement. Pour permettre le bon fonctionnement du système de propulsion du deuxième étage du lanceur, l'enceinte de l'étage intermédiaire est détachée du reste du lanceur dans le même temps ou presque que le premier étage du lanceur.

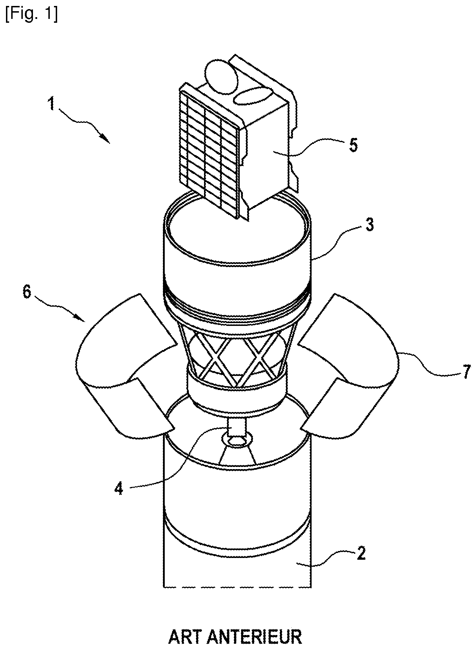

Sur la figure 1 est représenté une vue partielle en perspective d'un exemple de lanceur aérospatial 1 selon l'état de la technique. Sur cet exemple d'illustration, le lanceur aérospatial 1 ne comprend que deux étages et un étage intermédiaire. Le lanceur aérospatial 1 comprend un premier étage 2 destiné uniquement à la propulsion sur une première phase et comprenant pour cela un premier système de propulsion, un second étage 3 comprenant un second système de propulsion 4 et embarquant à l'intérieur un module spatial 5 tel qu'un satellite, et un étage intermédiaire 6 comprenant essentiellement une enceinte annulaire 7.

Comme cela est illustré sur la figure 1, pour faciliter le décrochement de l'enceinte annulaire 7 de l'étage intermédiaire 6, il est connu de diviser l'enceinte 7 en au moins deux segments, ou fragments, d'enceinte 72 et 74 détachables l'un de l'autre. Cela permet notamment de réduire les risques de choc avec les tuyères de propulsion du deuxième étage.

Le décrochage du premier étage et de l'enceinte de l'étage intermédiaire sont réalisés généralement alors que le lanceur se trouve encore dans l'atmosphère terrestre. Par conséquent, le premier étage et l'étage intermédiaire vont, par gravité, redescendre sur Terre. La trajectoire du lanceur et le timing de la séparation du premier étage du lanceur sont donc important pour s'assurer que la chute du premier étage et la chute de l'enceinte de l'étage intermédiaire suivent une trajectoire se terminant sur une zone sécurisée. Le document US2022081130A1 divulgue une enceinte annulaire d'un lanceur spatial avec des charnières.

Un problème se pose cependant pour l'enceinte de l'étage intermédiaire ou les segments d'enceinte. La forme de l'enceinte ou de ses segments présente une résistance à l'air importante qui ne permet pas d'avoir une trajectoire de chute bien contrôlable. Autrement dit, les frottements à l'air importants génèrent des changements de direction qui font que le nombre de trajectoires possibles pour la chute de l'enceinte ou des segments d'enceinte est très grand, obligeant alors à définir une zone de sécurité au sol très importante.

### Exposé de l'invention

La présente invention a donc pour but principal de proposer une solution pour limiter les variations de trajectoire de chute possibles pour les segments d'enceinte d'étage intermédiaire d'un lanceur aérospatial multi-étage.

Dans un premier objet de l'invention, il est proposé une enceinte annulaire d'un étage intermédiaire d'un lanceur aérospatial multi-étage, l'enceinte comprenant au moins deux segments formant ensemble un anneau définissant une direction axiale, une direction radiale et une direction circonférentielle.

Selon une caractéristique générale de l'invention, chaque segment d'enceinte annulaire comprend :
- un premier panneau et un second panneau comportant chacun une première extrémité circonférentielle et une seconde extrémité circonférentielle,
- une charnière couplant mécaniquement la première extrémité circonférentielle du premier panneau à la première extrémité circonférentielle du second panneau et configurée pour replier le premier panneau vers le second panneau lorsque le segment d'enceinte est décroché de l'enceinte annulaire.

La formation d'un segment d'enceinte annulaire à l'aide de deux panneaux mécaniquement couplés ensemble par une charnière permet au segment de se plier en deux, le premier panneau et le second panneau se repliant l'un sur l'autre. Ce pliage permet de modifier la forme générale du segment pendant sa chute, notamment avec une forme générale plus aérodynamique grâce à une pointe formée à une extrémité de la forme pliée du segment portant la charnière.

Cette forme est plus aérodynamique en ce qu'elle réduit les frottements avec l'air, et permet ainsi de mieux contrôler la trajectoire de chute du segment, limitant ainsi la dispersion de trajectoire d'un segment.

Dans un premier mode de réalisation de l'enceinte annulaire, chaque segment de l'enceinte annulaire peut comprendre un ressort de compression configuré pour attirer le premier panneau vers le second panneau.

Le ressort de compression permet ainsi d'accélérer le pliage du segment dans sa forme aérodynamique et également de maintenir le segment dans sa conformation pliée, réduisant ainsi les risques de changement de trajectoire et la dispersion de trajectoire.

Le segment est ainsi plié sur lui-même dès le début de son décrochage et peut donc démarrer sa chute avec sa forme aérodynamique.

En outre, avec le ressort de compression on peut contrôler le sens du pliage au début et ne pas laisser les frottements de l'air décider du sens de pliage. Si le premier panneau et le second panneau comprennent chacun une face radialement interne et une face radialement externe, le ressort de compression peut forcer un pliage pour avoir les deux faces radiales internes en regard l'une de l'autre ou un pliage pour avoir les deux faces radiales externes en regard l'une de l'autre.

Dans un deuxième mode de réalisation de l'enceinte annulaire, l'enceinte peut également comprendre au moins une fixation pyrotechnique disposée entre deux segments pour maintenir les segments ensemble jusqu'à ce que la fixation pyrotechnique soit déclenchée pour séparer les deux segments.

La fixation pyrotechnique peut être actionnée au moment du décrochage du premier étage du lanceur aérospatial pour ainsi faciliter le décrochage de l'enceinte annulaire de l'étage intermédiaire.

Dans un troisième mode de réalisation de l'enceinte annulaire, chaque segment de l'enceinte annulaire peut comprendre en outre une première ailette radiale montée sur la seconde extrémité du premier panneau et une seconde ailette radiale montée sur la seconde extrémité du second panneau.

De préférence dans ce troisième mode de réalisation, le premier panneau et le second panneau comprennent chacun une face radialement interne et une face radialement externe, et les ailettes radiales sont disposées sur la face radialement externe et le mécanisme de la charnière est configuré pour que le segment se plie en ayant les faces internes des premier et second panneaux qui soient en regard l'une de l'autre.

Dans cette configuration, les ailettes radiales forment des freins aérodynamiques qui permettent de ralentir la chute du segment dans l'atmosphère terrestre une fois le segment replié. En outre, les ailettes radiales vont favoriser le pliage du segment après son décrochage du lanceur aérospatial grâce aux frottements entre l'air et les ailettes radiales.

Dans une configuration où le segment se replie en ayant les faces radialement externes du premier et du second panneaux en regard l'une de l'autre, les ailettes radiales sont disposées sur la face radialement interne. Elles permettent ainsi d'accentuer les frottements avec l'air et donc d'accroître la résistance et donc le ralentissement du segment dans sa chute.

Dans un quatrième mode de réalisation de l'enceinte annulaire, la première ailette radiale et la seconde ailette radiale comportent chacun une surface de freinage s'étendant selon la direction axiale et s'opposant à un écoulement selon la direction circonférentielle.

Pour maximiser la surface de frottement avec l'air fournie par chaque ailette radiale, elles peuvent s'étendre sur toute la longueur du segment selon la direction axiale et ainsi former un obstacle pour l'air s'écoulant selon la direction circonférentielle.

Dans un cinquième mode de réalisation de l'enceinte annulaire, la première ailette radiale et la seconde ailette radiale peuvent être escamotables.

Cela permet de réduire les frottements notamment selon la direction axiale, pour améliorer notamment l'aérodynamique du lanceur aérospatial sur lequel est montée l'enceinte d'étage intermédiaire tant que l'enceinte est accrochée au lanceur aérospatial.

Les ailettes radiales sont alors déployées au moment, ou après, le décrochage de l'enceinte annulaire et sa fragmentation en segments.

Lorsque les ailettes radiales sont disposées sur la face radialement interne des panneaux, cela permet de libérer de l'espace interne.

Dans une sixième mode de réalisation de l'enceinte annulaire, la première ailette radiale et la seconde ailette radiales peuvent être formées chacune par une vessie gonflable via un déclencheur pyrotechnique.

Dans une variante, la première ailette et la seconde ailette peuvent présenter chacune une section triangulaire creuse dans un plan de coupe orthogonal à la direction axiale.

La section triangulaire creuse des ailettes radiales dans un plan de coupe orthogonal à la direction axiale permet ainsi de minimiser les frottements des ailettes radiales avec l'air selon la direction axiale, et donc lorsque l'enceinte annulaire est accrochée au lanceur aérospatial en mouvement, tout en offrant une surface de frottement importante selon la direction circonférentielle.

Dans un septième mode de réalisation, le premier panneau et le second panneau peuvent comprendre chacun une face radialement interne et une face radialement externe, et le ressort de compression peut être configuré pour replier le premier panneau sur le second panneau pour avoir la face radialement externe du premier panneau en regard de la face radialement externe du second panneau lorsque le segment est décroché de l'enceinte annulaire.

Dans cette configuration, la courbure de chaque panneau et l'orientation des panneaux une fois le segment replié en deux permettent de générer des frottements important entre les panneaux et l'air selon la direction de chute une fois le segment replié. Dans cette configuration, les ailettes radiales peuvent ajoutées pour accroître le ralentissement.

Dans un second objet de l'invention, il est proposé un lanceur aérospatial multi-étage comprenant un premier étage doté d'un premier système de propulsion, un second étage doté d'un second système de propulsion, et un étage intermédiaire disposé entre le premier étage et le second étage et configuré pour recevoir au moins une partie du second système de propulsion du second étage, l'étage intermédiaire du lanceur aérospatial multi-étage comprenant en outre une enceinte pour étage intermédiaire d'un lanceur aérospatial multi-étage telle que définie ci-dessus.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif.
[Fig. 1] La figure 1, déjà décrite, représente schématiquement une vue partielle en perspective d'un lanceur aérospatial selon un mode de réalisation de l'invention.
[Fig. 2] La figure 2 représente schématiquement une vue en perspective d'une enceinte annulaire d'un étage intermédiaire d'un lanceur aérospatial selon un mode de réalisation de l'invention.
[Fig. 3] La figure 3 représente schématiquement une vue en perspective d'un segment de l'enceinte annulaire de la figure 2 dans une position déployée.
[Fig. 4] La figure 4 représente schématiquement une vue en perspective d'un segment de l'enceinte annulaire de la figure 2 dans une position repliée.
[Fig. 5] La figure 5 représente schématiquement une vue en coupe de l'enceinte annulaire de la figure 2 dans un plan de coupe orthogonal à la direction axiale.
[Fig. 6] La figure 6 représente schématiquement une vue en coupe du segment de la figure 3 en position déployée dans un pan de coupe orthogonal à la direction axiale.
[Fig. 7] La figure 7 représente schématiquement une vue en coupe du segment de la figure 4 en position repliée dans un pan de coupe orthogonal à la direction axiale.
[Fig. 8] La figure 8 présente un zoom sur la seconde extrémité circonférentielle d'un premier panneau de la figure 7.

### Description des modes de réalisation

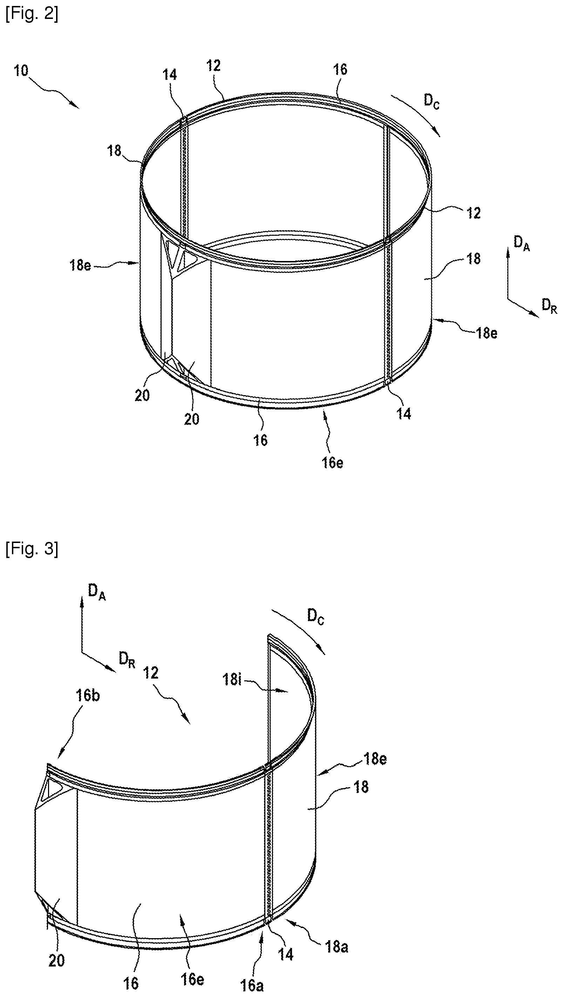

Sur la figure 2 est représenté une vue en perspective d'une enceinte annulaire 10 d'un étage intermédiaire d'un lanceur aérospatial selon un mode de réalisation de l'invention.

L'enceinte annulaire 10 selon l'invention peut être intégrée à un lanceur aérospatial multi-étage tel que le lanceur 1 de la figure 1.

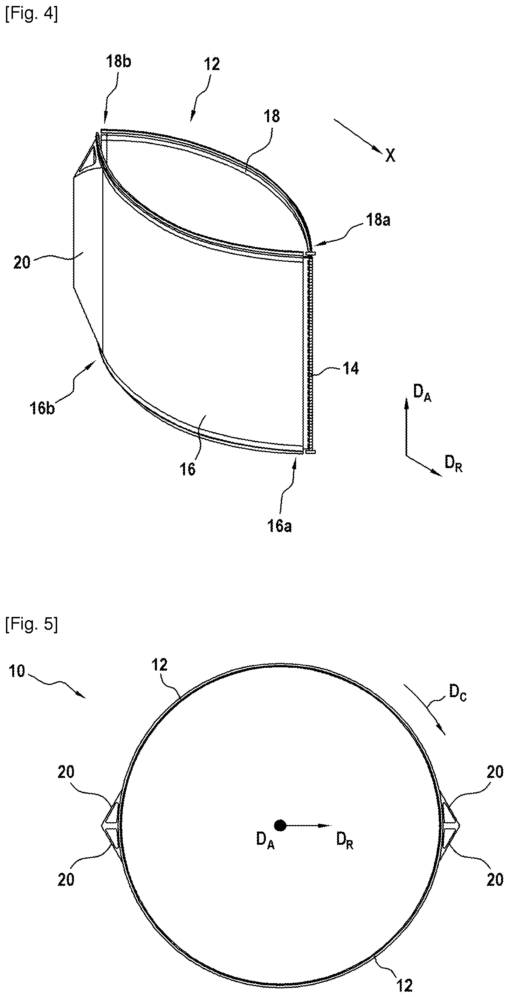

Dans le mode de réalisation illustré sur la figure 2, l'enceinte annulaire 10 comprend deux segments 12 détachables. Les deux segments 12 sont fixés ensemble pour former l'enceinte annulaire 10 sous la forme d'une couronne circulaire définissant une direction axiale D_{A}, une direction radiale D_{R}, et une direction circonférentielle D_{C} comme cela est illustré sur la figure 2 et sur la figure 5 qui présente une vue en coupe de l'enceinte annulaire de la figure 2 selon un plan de coupe orthogonal à la direction axiale D_{A}, autrement dit selon un plan de coupe comprenant la direction radiale et la direction circonférentielle D_{C}.

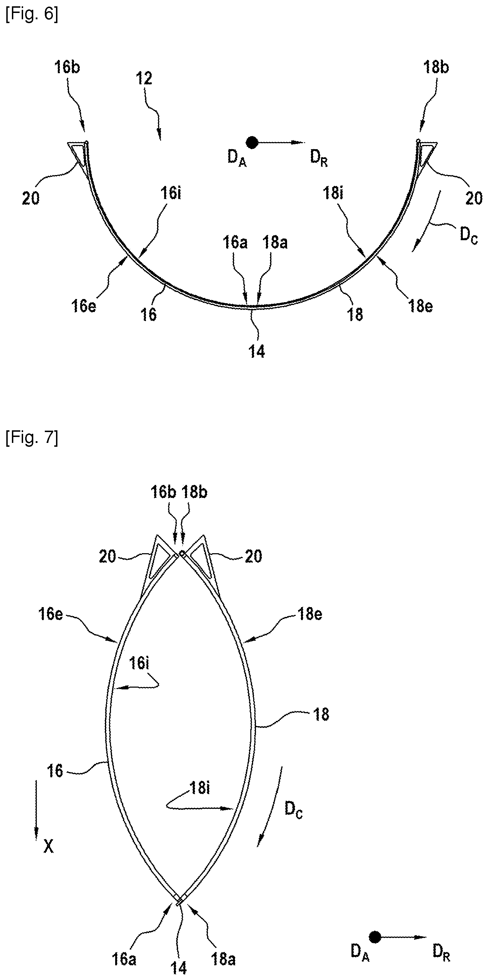

Chaque segment 12 comprend ainsi une forme courbe en arc de cercle, et plus particulièrement dans ce mode de réalisation, en forme de demi-cercle comme cela est illustré notamment sur les figures 2 et 5, mais également sur la figure 3 qui représente une vue en perspective d'un segment 12 de l'enceinte annulaire 10 de la figure 2 selon un mode de réalisation de l'invention, ainsi que sur la figure 6 qui présente une vue en coupe du segment 12 de la figure 3 selon un plan de coupe orthogonal à la direction axiale D_{A}.

Les deux segments 12 sont fixés l'un à l'autre à l'aide de fixations pyrotechniques non représentées et configurées pour être déclenchées lors du décrochage de l'étage intermédiaire du lanceur aérospatial. Le déclenchement des fixations pyrotechniques permet aux deux segments 12 de se décrocher l'un de l'autre.

Comme cela est illustré sur les figures 2 et 3, chaque segment 12 comprend une charnière 14, un premier panneau 16 et un second panneau 18. Chaque segment 12 est ainsi divisé en deux panneaux 16 et 18 réunis par une charnière 14.

Le premier panneau 16 et le second panneau 18 ont chacun une forme de quart de cercle et comprennent, selon la direction circonférentielle D_{C}, une première extrémité circonférentielle, respectivement notée 16a et 18a, et une seconde extrémité circonférentielle, respectivement notée 16b et 18b.

La charnière 14 est fixée à la première extrémité circonférentielle 16a du premier panneau et à la première extrémité circonférentielle 18a du second panneau 18.

Et, comme cela est illustré sur la figure 2, la seconde extrémité circonférentielle 16b du premier panneau 16 d'un premier segment 12 de l'enceinte annulaire 10 est fixée via une fixation pyrotechnique à la seconde extrémité circonférentielle 18b du second panneau 18 d'un second segment 12, et la seconde extrémité circonférentielle 18b du second panneau 18 du premier segment 12 est fixée via une fixation pyrotechnique à la seconde extrémité circonférentielle 16b du premier panneau 16 du second segment 12 de l'enceinte annulaire 10.

La charnière 14 intègre en outre un ressort de compression non visible sur les figures qui permet de modifier la forme du segment 12 et ainsi passer d'une configuration déployée comme illustrée sur les figures 3 et 5 à une configuration pliée comme illustrée sur la figure 4 qui représente une vue en perspective du segment 12 de l'enceinte annulaire 10 de la figure 2 dans une position repliée, et sur la figure 7 qui présente une vue en coupe du segment 12 de la figure 4 selon un plan de coupe orthogonal à la direction axiale D_{A}.

Dans une variante, le ressort de compression peut être indépendant de la charnière 14

Le ressort de compression de la charnière 14 est configuré pour ramener les secondes extrémités circonférentielles 16b et 18b du premier panneau 16 et du second panneau 18 l'une vers l'autre, jusqu'à ce qu'elle soit en contact l'une de l'autre ou presque.

Le premier panneau 16 et le second panneau 18 comprennent chacun une face radialement interne, notée respectivement 16i et 18i, et une face radialement externe, notée respectivement 16e et 18e.

Le ressort de compression de la charnière 14 est configuré pour replier le segment 12 pour que les faces radialement internes 16i et 18i du premier panneau 16 et du second panneau 18 soient en regard l'une de l'autre.

Comme cela est illustré sur les figures 2 à 7, le premier panneau 16 et le second panneau 18 comprennent chacun sur leur seconde extrémité circonférentielle, 16b et 18b, une ailette radiale 20 s'étendant sur toute la longueur du segment 12 selon la direction axiale D_{A}, et s'étendant en saillie radiale cers l'extérieur depuis la surface radialement externe 16e ou 18e du panneau 16 ou 18 sur lequel elle est montée.

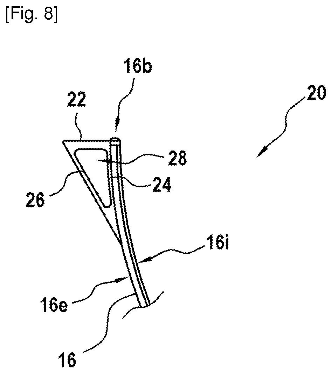

Comme cela est illustré sur les figures 2 à 7 et sur la figure 8 qui présente un zoom sur la seconde extrémité circonférentielle 16b d'un premier panneau 16 portant l'ailette radiale 20, chaque ailette radiale 20 comprend un section transversale, c'est-à-dire selon un plan de coupe orthogonale à la direction axiale D_{A}, ayant une forme triangulaire creuse.

Chaque ailette radiale 20 comprend ainsi une première partie 22 s'étendant radialement et formant, dans un plan de coupe orthogonal à la direction axiale D_{A}, un premier côté de la section triangulaire creuse de l'ailette radiale 20, une deuxième partie 24 s'étendant selon la direction circonférentielle D_{C} et formant, dans un plan de coupe orthogonal à la direction axiale D_{A}, un deuxième côté de la section triangulaire creuse de l'ailette radiale 20, et une troisième partie 26 reliée à la première partie 22 et à la deuxième partie 24 pour former, dans un plan de coupe orthogonal à la direction axiale D_{A}, le troisième côté de la section triangulaire creuse de l'ailette radiale 20.

La première partie 22, la deuxième partie 24 et la troisième partie 26 forment ensemble un périmètre triangulaire à l'intérieur duquel se trouve un passage 28 s'étendant sur toute la longueur axiale de l'ailette radiale 20. Ce passage 28 permet à l'air de s'écouler selon la direction axiale D_{A} et ainsi de réduire la résistante à l'air de l'ailette radiale lorsque l'enceinte annulaire 10 est accrochée sur le lanceur aérospatial et que le lanceur est en mouvement principalement dans cette direction, comme lors de la phase de lancement.

Chaque ailette radiale 20 permet ainsi d'accentuer la résistance à l'air du segment 12 lorsqu'il est décroché du lanceur et qu'il est en phase de chute, ce qui permet d'augmenter la force exercée sur chacun des panneaux 16 et 18 pour les rapprocher l'un de l'autre, et ensuite freiner la chute du segment 12 replié selon sa direction principale de chute X.

L'enceinte annulaire 10 selon l'invention offre ainsi une solution pour limiter les variations de trajectoire de chute possibles pour les segments d'enceinte d'étage intermédiaire d'un lanceur aérospatial multi-étage.

## Revendications

1. Enceinte annulaire (10) d'un étage intermédiaire d'un lanceur aérospatial multi-étage, l'enceinte annulaire (10) comprenant au moins deux segments (12) formant ensemble un anneau définissant une direction axiale (D_{A}), une direction radiale (D_{R}) et une direction circonférentielle (D_{C}), dans laquelle chaque segment (12) de l'enceinte annulaire (10) comprend :
- un premier panneau (16) et un second panneau (18) comportant chacun une première extrémité circonférentielle (16a, 18a) et une seconde extrémité circonférentielle (16b, 18b),
- une charnière (14), étant **caractérisée en ce que** la charnière (14) couple mécaniquement la première extrémité circonférentielle (16a) du premier panneau (16) à la première extrémité circonférentielle (18a) du second panneau (18) et **en ce que** la charnière (14) est configurée pour replier le premier panneau (16) vers le second panneau (18) lorsque le segment d'enceinte (12) est décroché de l'enceinte annulaire (10).

2. Enceinte annulaire (10) selon la revendication 1, dans laquelle chaque segment (12) de l'enceinte annulaire (10) comprend un ressort de compression configuré pour attirer le premier panneau (16) vers le second panneau (18).

3. Enceinte annulaire (10) selon l'une des revendications 1 ou 2, comprenant en outre au moins une fixation pyrotechnique disposée entre deux segments (12) pour maintenir les segments (12) ensemble jusqu'à ce que la fixation pyrotechnique soit déclenchée pour séparer les deux segments (12).

4. Enceinte annulaire (10) selon l'une des revendications 1 à 3, une première ailette radiale (20) montée sur la seconde extrémité (16b) du premier panneau (16) et une seconde ailette radiale (20) montée sur la seconde extrémité (18b) du second panneau (18).

5. Enceinte annulaire (10) selon la revendication 4, dans laquelle la première ailette radiale (20) et la seconde ailette radiale (20) comportent chacun une surface de freinage (26) s'étendant selon la direction axiale (D_{A}) et s'opposant à un écoulement selon la direction circonférentielle (Dc).

6. Enceinte annulaire (10) selon l'une des revendications 4 ou 5, dans laquelle la première ailette radiale (20) et la seconde ailette radiale (20) sont escamotables.

7. Enceinte annulaire (10) selon la revendication 6, dans laquelle la première ailette radiale (20) et la seconde ailette radiale (20) sont formées chacune par une vessie gonflable via un déclencheur pyrotechnique.

8. Enceinte annulaire (10) selon la revendication 6, dans laquelle la première ailette radiale (20) et la seconde ailette radiale (20) présentent chacune une section triangulaire creuse dans un plan de coupe orthogonal à la direction axiale (D_{A}).

9. Enceinte annulaire (10) selon la revendication 2 ou la revendication 2 prise en combinaison avec l'une des revendications 3 à 8, dans lequel le premier panneau (16) et le second panneau (18) comprennent chacun une face radialement interne (16i, 18i) et une face radialement externe (16e, 18e), et le ressort de compression est configuré pour replier le premier panneau (16) sur le second panneau (18) pour avoir la face radialement externe (16e) du premier panneau (16) en regard de la face radialement externe (18e) du second panneau (18) lorsque le segment (12) est décroché de l'enceinte annulaire (10).

10. Lanceur aérospatial multi-étage comprenant un premier étage doté d'un premier système de propulsion, un second étage doté d'un second système de propulsion, et un étage intermédiaire disposé entre le premier étage et le second étage et configuré pour recevoir au moins une partie du second système de propulsion du second étage,
**caractérisé en ce que** l'étage intermédiaire du lanceur aérospatial multi-étage comprend une enceinte annulaire (10) pour étage intermédiaire d'un lanceur aérospatial multi-étage selon l'une des revendications 1 à 9.

## Patentansprüche

1. Ringförmiges Gehäuse (10) einer Zwischenstufe einer mehrstufigen Trägerrakete, wobei das ringförmige Gehäuse (10) mindestens zwei Segmente (12) umfasst, die zusammen einen Ring bilden, der eine axiale Richtung (D_{A}), eine radiale Richtung (D_{R}) und eine Umfangsrichtung (D_{C}) definiert, wobei jedes Segment (12) des ringförmigen Gehäuses (10) umfasst:
- ein erstes Plattenfeld (16) und ein zweites Plattenfeld (18), die jeweils ein erstes Umfangsende (16a, 18a) und ein zweites Umfangsende (16b, 18b) umfassen,
- ein Scharnier (14), das **dadurch gekennzeichnet ist, dass** das Scharnier (14) das erste Umfangsende (16a) des ersten Plattenfeldes (16) mit dem ersten Umfangsende (18a) des zweiten Plattenfeldes (18) mechanisch koppelt, und dass das Scharnier (14) dazu konfiguriert ist, das erste Plattenfeld (16) auf das zweite Plattenfeld (18) umzuklappen, wenn das Gehäusesegment (12) von dem ringförmigen Gehäuse (10) ausgehängt wird.

2. Ringförmiges Gehäuse (10) nach Anspruch 1, wobei jedes Segment (12) des ringförmigen Gehäuses (10) eine Druckfeder umfasst, die dazu konfiguriert ist, das erste Plattenfeld (16) in Richtung auf das zweite Plattenfeld (18) anzuziehen.

3. Ringförmiges Gehäuse (10) nach einem der Ansprüche 1 oder 2, ferner umfassend mindestens ein pyrotechnisches Befestigungsmittel, das zwischen zwei Segmenten (12) angeordnet ist, um die Segmente (12) zusammenzuhalten, bis das pyrotechnische Befestigungsmittel ausgelöst wird, um die beiden Segmente (12) zu trennen.

4. Ringförmiges Gehäuse (10) nach einem der Ansprüche 1 bis 3, wobei eine erste radiale Rippe (20) an dem zweiten Ende (16b) des ersten Plattenfeldes (16) montiert ist, und eine zweite radiale Rippe (20) an dem zweiten Ende (18b) des zweiten Plattenfeldes (18) montiert ist.

5. Ringförmiges Gehäuse (10) nach Anspruch 4, wobei die erste radiale Rippe (20) und die zweite radiale Rippe (20) jeweils eine Bremsfläche (26) umfassen, die sich in der axialen Richtung (D_{A}) erstreckt und einer Strömung in der Umfangsrichtung (D_{C}) entgegenwirkt.

6. Ringförmiges Gehäuse (10) nach einem der Ansprüche 4 oder 5, wobei die erste radiale Rippe (20) und die zweite radiale Rippe (20) einziehbar sind.

7. Ringförmiges Gehäuse (10) nach Anspruch 6, wobei die erste radiale Rippe (20) und die zweite radiale Rippe (20) jeweils aus einer Blase gebildet sind, die über einen pyrotechnischen Auslöser aufblasbar ist.

8. Ringförmiges Gehäuse (10) nach Anspruch 6, wobei die erste radiale Rippe (20) und die zweite radiale Rippe (20) jeweils einen hohlen dreieckigen Querschnitt in einer Schnittebene aufweisen, die zu der axialen Richtung (D_{A}) orthogonal ist.

9. Ringförmiges Gehäuse (10) nach Anspruch 2 oder nach Anspruch 2 kombiniert mit einem der Ansprüche 3 bis 8, wobei das erste Plattenfeld (16) und das zweite Plattenfeld (18) jeweils eine radial interne Seite (16i, 18i) und eine radial externe Seite (16e, 18e) umfassen, und die Druckfeder dazu konfiguriert ist, das erste Plattenfeld (16) auf das zweite Plattenfeld (18) umzuklappen, damit sich die radial externe Seite (16e) des ersten Plattenfeldes (16) gegenüber der radial externen Seite (18e) des zweiten Plattenfeldes (18) befindet, wenn das Segment (12) von dem ringförmigen Gehäuse (10) ausgehängt wird.

10. Mehrstufige Trägerrakete, umfassend eine erste Stufe mit einem ersten Antriebssystem, eine zweite Stufe mit einem zweiten Antriebssystem und eine Zwischenstufe, die zwischen der ersten Stufe und der zweiten Stufe angeordnet ist und dazu konfiguriert ist, mindestens einen Teil des zweiten Antriebssystems der zweiten Stufe aufzunehmen,
**dadurch gekennzeichnet, dass** die Zwischenstufe der mehrstufigen Trägerrakete ein ringförmiges Gehäuse (10) für eine Zwischenstufe einer mehrstufigen Trägerrakete nach einem der Ansprüche 1 bis 9 umfasst.

## Claims

1. An annular enclosure (10) of an intermediate stage of a multi-stage aerospace launcher, the annular enclosure (10) comprising at least two segments (12) together forming a ring defining an axial direction (D_{A}), a radial direction (D_{R}) and a circumferential direction (D_{C}),
wherein each segment (12) of the annular enclosure (10) comprises:
- a first panel (16) and a second panel (18) each including a first circumferential end (16a, 18a) and a second circumferential end (16b, 18b),
- a hinge (14), being **characterized in that** the hinge (14) mechanically couples the first circumferential end (16a) of the first panel (16) to the first circumferential end (18a) of the second panel (18) and **in that** the hinge (14) is configured to fold the first panel (16) towards the second panel (18) when the enclosure segment (12) is disengaged from the annular enclosure (10).

2. The annular enclosure (10) according to claim 1, wherein each segment (12) of the annular enclosure (10) comprises a compression spring configured to attract the first panel (16) towards the second panel (18).

3. The annular enclosure (10) according to any of claims 1 or 2, further comprising at least one pyrotechnic fastener disposed between two segments (12) to hold the segments (12) together until the pyrotechnic fastener is triggered to separate the two segments (12).

4. The annular enclosure (10) according to any of claims 1 to 3, a first radial fin (20) mounted on the second end (16b) of the first panel (16) and a second radial fin (20) mounted on the second end (18b) of the second panel (18).

5. The annular enclosure (10) according to claim 4, wherein the first radial fin (20) and the second radial fin (20) each include a braking surface (26) extending along the axial direction (D_{A}) and opposing a flow along the circumferential direction (D_{C}).

6. The annular enclosure (10) according to any of claims 4 or 5, wherein the first radial fin (20) and the second radial fin (20) are retractable.

7. The annular enclosure (10) according to claim 6, wherein the first radial fin (20) and the second radial fin (20) are each formed by an inflatable bladder via a pyrotechnic trigger.

8. The annular enclosure (10) according to claim 6, wherein the first radial fin (20) and the second radial fin (20) each have a triangular hollow section in a cutting plane orthogonal to the axial direction (D_{A}).

9. The annular enclosure (10) according to claim 2 or to claim 2 taken in combination with any of claims 3 to 8, wherein the first panel (16) and the second panel (18) each comprise a radially inner face (16i, 18i) and a radially outer face (16e, 18e), and the compression spring is configured to fold the first panel (16) onto the second panel (18) to have the radially outer face (16e) of the first panel (16) opposite the radially outer face (18e) of the second panel (18) when the segment (12) is disengaged from the annular enclosure (10).

10. A multi-stage aerospace launcher comprising a first stage equipped with a first propulsion system, a second stage equipped with a second propulsion system, and an intermediate stage disposed between the first stage and the second stage and configured to receive at least part of the second propulsion system of the second stage,
**characterized in that** the intermediate stage of the multi-stage aerospace launcher comprises an annular enclosure (10) for the intermediate stage of a multi-stage aerospace launcher according to any of claims 1 to 9.
